# EUROPÄISCHE PATENTANMELDUNG

(11) **EP 2 607 553 A1**
(43) Veröffentlichungstag der Anmeldung: **26.06.2013**
(21) Anmeldenummer: 11010075.7
(22) Anmeldetag: 22.12.2011
(51) Int. Cl.: E01F 7/04, F16F 7/12

(54) **Vorrichtung und Verfahren zur Energiedissipation**

(71) Anmelder: Trumer Schutzbauten GesmbH, 5110 Oberndorf b. Salzburg (AT)
(72) Erfinder: Stelzer, Gernot, 5431 Kuchl (AT); Jäger, Daniel, 5162 Obertrum (AT)
(74) Vertreter: Schmitz, Hans-Werner

(57) **Zusammenfassung**

Vorrichtung (1) und Verfahren zur Energiedissipation mit einem deformierbaren, langgestreckten, eine Längsachse (L) aufweisenden Materialstreifen (2), der in ein auf Zug beanspruchbares Seil (3) eingebaut ist; und mit einer Verformungseinrichtung (4), die ebenfalls in das Seil (3) ein gebaut ist und mit dem Materialstreifen (2) zusammenwirkt, wobei der Materialstreifen (2, 2') beim Aufbringen einer Zugkraft auf das Seil (3) entlang seiner Längsachse (L) geradlinig durch die Verformungseinrichtung (4) hindurchführbar und dabei verformbar ist.

## Beschreibung

Die Erfindung betrifft eine Vorrichtung sowie ein Verfahren zur Energiedissipation gemäß dem Oberbegriff des Anspruches 1 bzw. 16..

Eine gattungsgemäße Vorrichtung ist aus der WO 2009/137951 bekannt. Diese bekannte Vorrichtung ist als Vorrichtung zur Stoßdämpfung von Seilkonstruktionen, insbesondere für Steinschlag-, Murgang- und Schneeverbauungen ausgebildet und absorbiert in ein auf Zug beanspruchtes Seil eingebrachte Energie dadurch, dass ein durch Zugkräfte deformierbares Zwischenstück, welches in ein auf Zug beanspruchtes Seil eingebaut ist, ein oder mehrere Längselemente aufweist. Hierbei steht das mindestens eine Längselement einerseits mit seinem einen Ende in Verbindung mit einem Seilende und andererseits wird es um ein mit einem anderen Seilende verbundenes Umlenkelement geführt. Schließlich sind Mittel vorgesehen, durch welche der gebildete Umlenkwinkel des oder der Längselemente bei der Belastung des Zwischenstücks im Wesentlichen aufrechterhalten bleibt.

Der Nachteil dieser bekannten Vorrichtung ist zunächst in einem relativ hohen baulichen Aufwand zu sehen, der vor allem darin begründet ist, dass zur Energieaufnahme eine Umbiegung bzw. Umlenkung des Zwischenstückes über das Umlenkelement erfolgt, wobei zur Aufrechterhaltung des Umlenkwinkels eine besondere Vorrichtung vorgesehen sein muss, die beispielsweise aus zwei Führungszapfen bestehen kann. Des Weiteren haben im Rahmen der Erfindung durchgeführte Untersuchungen ergeben, dass trotz des Zieles der gattungsgemäßen Druckschrift, den Stoß-Dämpfungsverlauf besser zu definieren bzw. zu optimieren hier weiterer Verbesserungsbedarf insbesondere beim Eintrag hoher Lasten in das Seil gegeben ist.

Es ist daher Aufgabe der vorliegenden Erfindung, eine Vorrichtung der im Oberbegriff des Anspruchs 1 angegebenen Art und ein Verfahren gemäß Anspruch 16 zu schaffen, mit dem eine zumindestens weitgehend lineare Energieaufnahme der in das Seil eingebrachten Lasten gewährleistet ist.

Die Lösung dieser Aufgabe erfolgt durch die Merkmale des Anspruches 1 bzw. des Anspruches 16.

Bei der erfindungsgemäßen Vorrichtung ist eine Verformungseinrichtung vorgesehen, die mit einem Materialstreifen derart zusammenwirkt, dass dieser Materialstreifen beim Aufbringen einer Zugkraft auf das Seil, mit dem der Materialstreifen verbunden ist, geradlinig durch die Verformungseinrichtung hindurchführbar ist und dabei zur Energieaufnahme verformt wird. Das geradlinige Hindurchführen bedeutet erfindungsgemäß, dass, im Gegensatz zum gattungsgemäßen Stand der Technik, keine Umbiegung oder Umlenkung des Materialstreifens erfolgt, da die erfindungsgemäße Verformungseinrichtung derart aufgebaut ist, dass eine Energieaufnahme trotz des Vermeidens einer derartigen Umlenkung bzw. Umbiegung möglich ist.

Entsprechende Verfahrensschritte sind in Anspruch 16 definiert.

Die erfindungsgemäße Vorrichtung sowie das erfindungsgemäße Verfahren basieren auf dem Konzept, trotz der Vermeidung einer Umlenkung des Materialstreifens, die zu den eingangs aufgeführten technischen Problemen führt, eine Energieaufnahme dadurch möglich zu machen, dass entweder ein mit einem Profil versehener Materialstreifen durch die Verformungseinrichtung abgeplattet wird oder ein ebener, also unprofilierter Materialstreifen durch die Verformungseinrichtung mit einem Profil versehen wird, was durch Reibungsaufbringung und einer plastischen Verformung die nötige Energieaufnahme zur Abbremsung bzw. Stoßdämpfung des Seiles ergibt.

Als Profilierungen für den Materialstreifen sind vom Prinzip her jedwede Art von Profilen denkbar, wie beispielsweise L-, U-, V- oder auch O-Profile.

Dementsprechend ist auch eine Umformung eines ebenen Materialstreifens in diese Profile denkbar, da auch bei dieser Art der Verformung die erforderliche Energieaufnahme sichergestellt ist.

Zu den weiteren Vorteilen der Erfindung zählt der Umstand, dass die bauliche Ausgestaltung der erfindungsgemäßen Vorrichtung einfacher ausgeführt werden kann, da beispielsweise keine Einrichtungen zur Aufrechterhaltung eines Umlenkwinkels erforderlich sind, da der Materialstreifen eben geradlinig und damit umlenkungsfrei durch die Verformungseinrichtung hindurchgeführt bzw. vom Seil bei Aufbringung einer Zugkraft hindurchgezogen wird.

Ferner ist es vorteilhafterweise möglich, durch Einstellung eines Verformungsspaltes zwischen Verformungselementen den gewünschten Grad der Umformung bei dem geradlinigen Hindurchziehen des Materialstreifens einzustellen, wobei es beispielsweise auch möglich ist, zur Energieaufnahme den Materialstreifen auch nur in seinem Querschnitt oder auch nur in seiner Höhe und/oder Breite zu verringern, wozu im einfachsten Fall lediglich zwei einen entsprechend eingestellten Verformungsspalt begrenzende feststehende Verformungszylinder oder auch drehbare Verformungszylinder erforderlich sind.

Weitere Einzelheiten, Merkmale und Vorteile der Erfindung ergeben sich aus nachfolgender Beschreibung von Ausführungsbeispielen anhand der Zeichnung.

Es zeigt:
- Fig. 1A und 1 B: Darstellungen einer ersten Ausführungsform der erfindungsgemäßen Vorrichtung,
- Fig. 2A und 2B: Darstellungen einer zweiten Ausführungsform, und
- Fig. 3A und 3B: Darstellungen einer dritten Ausführungsform der erfindungsgemäßen Vorrichtung.

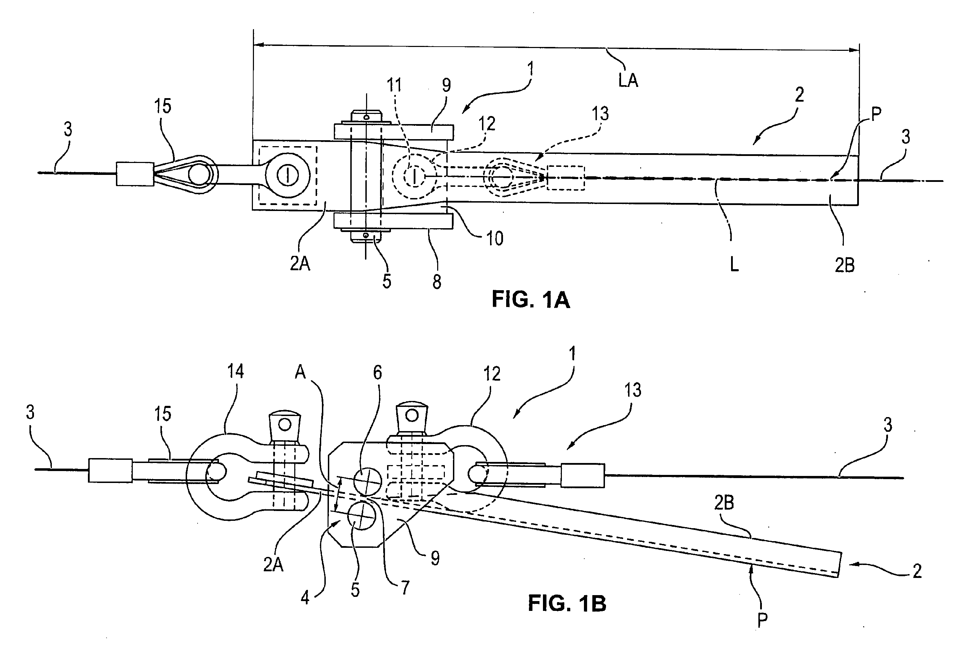

Aus einer Zusammenschau der Fig. 1A und 1 B ergibt sich der Aufbau der erfindungsgemäßen Vorrichtung 1 zur Dissipation bzw. Aufnahme von in ein Seil 3 durch auf das Seil 3 wirkende Zugkräfte eingebrachter Energie.

Die Vorrichtung 1 weist zunächst einen deformierbaren Materialstreifen 2 auf, der langgestreckt ist und eine Längsachse L sowie eine wählbare Länge LA aufweist. Die Länge LA des Materialstreifens 2 sowie seine Materialstärke können je nach Anwendungsfall an die aufzunehmenden Kräfte bzw. Energien angepasst werden.

Der Materialstreifen 2 weist einen Einführabschnitt 2A auf, der in seiner Form an einen Verformungsspalt 7 einer Verformungseinrichtung 4 angepasst ist. Hierbei wird der Verformungsspalt 7 von zwei Verformungselementen 5 und 6 begrenzt, die in einem wählbaren Abstand A zueinander in der Verformungseinrichtung 4 angeordnet werden können. Bei der in den Fig. 1A und 1B dargestellten Ausführungsform ist der Verformungsspalt 7 geradlinig ausgebildet und die Verformungselemente 5 und 6 sind als drehbare Walzen bzw. feststehende, vorzugsweise zylindrische Zapfen bzw. Bolzen ausgebildet. Sind die Verformungselemente 5, 6 als drehbare Walzen ausgebildet, ergibt sich der Vorteil, dass kein Gleiten auf den Rollen sondern ein Walzen erfolgt.

Die Verformungseinrichtung 4 weist hierfür zwei beabstandete Halteplatten 8 und 9 auf, die in ihrer Kontur bzw. Form ebenfalls an den jeweiligen Anwendungsfall anpassbar sind. Dies trifft natürlich ebenfalls auf die Materialstärke sowie die Materialart zu, so dass die Verformungseinrichtung 4 den jeweils aufzubringenden Kräften anpassbar ist.

Die Halteplatten 8 und 9 nehmen zwischen sich die beiden Verformungselemente 5 und 6 auf, die an ihren jeweiligen Endbereichen mit den Halteplatten 8 und 9 fest verbunden, beispielsweise verschweißt, oder drehbar verbunden sind.

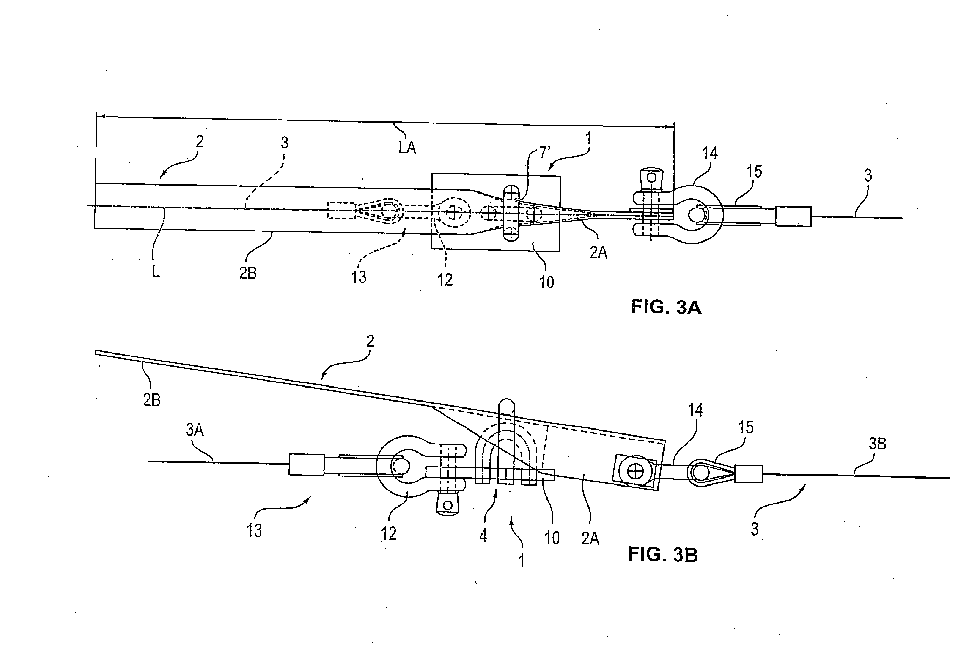

Ferner zeigen die Fig. 1A und 1B eine Anschlussplatte 10, die jeweils zwischen den Halteplatten 8 und 9 angeordnet und an diesen befestigt, beispielsweise verschweißt, ist. Die Anschlussplatte 10 weist eine Ausnehmung 11 auf, an der gemäß der Darstellung der Fig. 1A ein Anschlusselement 12, beispielsweise in Form eines Schäkels, befestigt werden kann, der wiederum an einem in Fig. 1A nur schematisch dargestellten Verankerungselement 13 befestigt ist, das üblicherweise mit dem Seil verbunden ist. Dieses Verankerungselement 13 kann aber auch als Zuganker ausgebildet sein, der zum Beispiel in einem Berghang verankert ist, falls das Seil 3 Teil einer Steinschlagverbauung ist, die mit Hilfe eines Netzes, das von einem bzw. mehreren Seilen, wie dem Seil 3 geführt ist, beispielsweise von einem Berg herabstürzende Felsbrocken auffängt. Die Vorrichtung 1 kann aber auch zwischen Seilen bzw. Seilabschnitten 3A, 3B (s. Fig. 3B) eingehängt werden.

Der Materialstreifen 2 weist ferner einen profilierten Abschnitt 2B auf, der im in den Fig. 1A und 1 B dargestellten Beispielsfalle L-förmig ausgebildet ist. Wie eingangs erläutert, sind jedoch jedwede andere Art von verformbaren Profilen für den Materialstreifen 2 bei der Ausführungsform gemäß den Fig. 1A und 1 B denkbar.

Wie die Darstellung der Fig. 1A verdeutlicht, ist der Eintrittsabschnitt 2A an einem Verbindungsstück (Schäkel) 14 festgelegt, an das entweder ein ortsfester Zuganker oder das Seil 3 angeschlossen werden kann, beispielsweise durch eine Seilschlaufe 15 oder andere geeignete Verbindungselemente, falls die Verformungseinrichtung 1 in ein Seil, bzw. zwischen dessen Seilabschnitte, eingebaut ist.

Die Vorrichtung 1 gemäß der Ausführungsform der Fig. 1A und 1 B wirkt wie folgt:
Wenn beispielsweise durch das Auffangen eines Felsbrockens eine Hangverbauung, in das Seil 3, das Teil einer derartigen Hangverbauung sein kann, eine Zugkraft eingebracht wird, zieht das Seil 3 den Materialstreifen 2 durch den Verformungsspalt 7 der Verformungseinrichtung 4, wobei zuvor der an die Form des Verformungsspaltes 7 angepasste Eintrittsabschnitt 2A in den Verformungsspalt 7 eingeführt worden und mit dem Seil 3 verbunden worden ist. Da bei der Ausführungsform der Fig. 1A und 1 B der Verformungsspalt 7 geradlinig ist, ist der Eintrittsabschnitt 2A dementsprechend abgeplattet, so dass ein Einführen des Abschnittes 2A in den Verformungsspalt 7 möglich wird. Beim Hindurchziehen des Materialstreifens 2 durch den Verformungsspalt 7 gelangt der profilierte Abschnitt 2B des Verformungsstreifens in den Verformungsspalt, der durch die Wirkung der Verformungselemente 5 und 6 den profilierten Abschnitt 2B abplattet und somit durch Erzeugung von Reibung und plastischer Verformung die in das Seil 3 eingebrachte Energie dissipiert. Das Hindurchziehen des Materialstreifens 2 durch den Verformungsspalt 7 erfolgt hierbei gänzlich ohne eine Umlenkung, was zu den zuvor erläuterten Vorteilen führt.

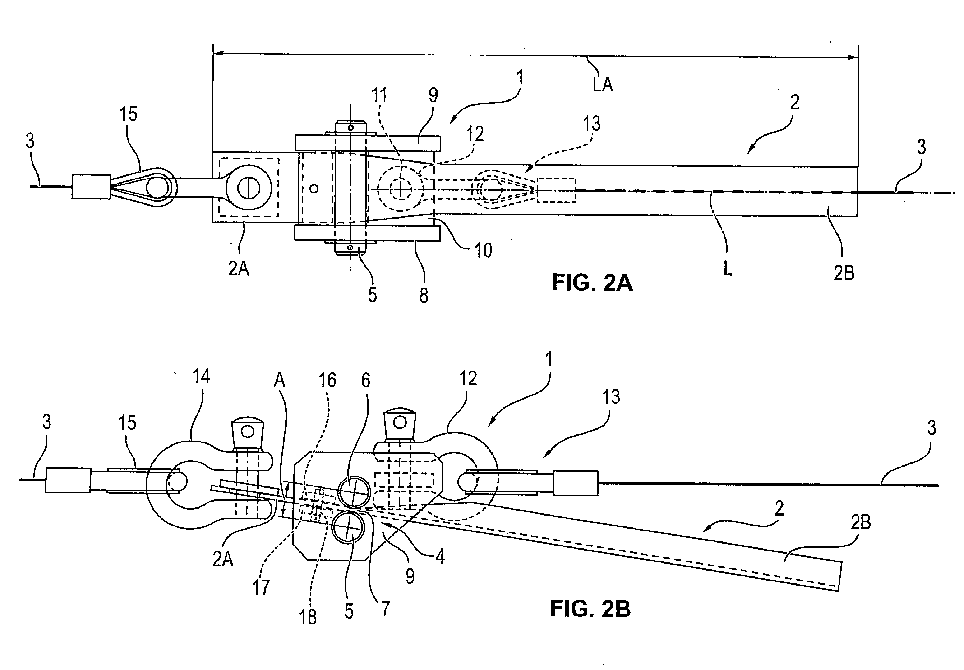

Gemäß den Fig. 2A und 2B ist eine zweite Ausführungsform der erfindungsgemäßen Vorrichtung 1 dargestellt, die im Wesentlichen der ersten Ausführungsform entspricht, so dass sämtliche dieser Ausführungsform entsprechende Teile mit den selben Bezugsziffern versehen sind. Daher kann insoweit auf die voranstehende Beschreibung Bezug genommen werden.

Die zweite Ausführungsform weist als ergänzende Merkmale zwei Laschen 16 und 17 auf, die zwischen den Halteplatten 8 und 9, mit diesen verbunden, angeordnet sind und durch die ein Sicherungsbolzen 18 hindurch verläuft, der ebenfalls eine Ausnehmung im Materialstreifen 2 durchgreift. Dadurch kann das Durchziehen des Materialstreifens 2 bis zu einem definierten Auslösewert, der die Kraft ist, bei dem der Sicherungsbolzen 18 durchgeschert wird, verhindert werden.

Bei der Ausführungsform gemäß den Fig. 3A und 3B sind sämtliche Teile, die in ihrer Struktur denjenigen der Fig. 1A und 1B entsprechen, mit denselben Bezugszeichen versehen.

Wie die Fig. 3A und 3B verdeutlichen, ist bei dieser Ausführungsform eine Dissipation der in das Seil 3 eingebrachten Energie dadurch möglich, dass ein ebener bzw. unkonturierter Materialstreifen 2 durch den konturierten Verformungsspalt 7' eine Kontur bzw. ein Profil aufgeprägt wird, was wiederum Reibung und eine plastische Verformung erzeugt, die der Energieaufnahme dient. Die in den Fig. 3A und 3B dargestellte Form des Verformungsspaltes 7' ist rein beispielhaft und kann dementsprechend zur Erzeugung anderer Profile (in diesem Fall ein U-Profil) abgeändert werden.

Neben der voranstehenden schriftlichen Offenbarung der Erfindung wird hiermit explizit auf deren zeichnerische Darstellung in den Fig. der Zeichnung Bezug genommen.

### Bezugszeichenliste

- 1: Vorrichtung zur Energiedissipation
- 2, 2': Materialstreifen
- 2A: Einführabschnitt
- 2B: Profilabschnitt
- 3: Seil
- 4: Verformungseinrichtung
- 5, 6: Verformungselemente
- 7, 7': Verformungsspalt
- 8, 9: Halteplatten
- 10: Anschlussplatte
- 11: Ausnehmung
- 12: Anschlusselement / Schäkel
- 13: Verankerungs-/Verbindungselement / Zuganker
- 14: Anschlusselement / Schäkel
- 15: Verbindungselement / Seilschlaufe
- 16, 17: Laschen
- 18: Sicherungsbolzen
- L: Längsachse
- LA: Länge
- A: Abstand
- P: Profil

## Patentansprüche

1. Vorrichtung (1) zur Energiedissipation
- mit einem deformierbaren langgestreckten, eine Längsachse (L) aufweisenden Materialstreifen (2), der in ein auf Zug beanspruchbares Seil (3) eingebaut ist; und
- mit einer Verformungseinrichtung (4), die mit dem Materialstreifen (2) zusammenwirkt, **dadurch gekennzeichnet,**
- **dass** der Materialstreifen (2, 2') beim Aufbringen einer Zugkraft auf das Seil (3) entlang seiner Längsachse (L) geradlinig durch die Verformungseinrichtung (4) hindurchführbar und dabei verformbar ist.

2. Vorrichtung nach Anspruch 1, **dadurch gekennzeichnet, dass** die Verformungseinrichtung (4) zwei Verformungselemente (5, 6) aufweist, die in einem wählbaren Abstand (A) zueinander positionierbar sind und dabei einen Verformungsspalt (7, 7') begrenzen.

3. Vorrichtung nach Anspruch 1 oder 2, **dadurch gekennzeichnet, dass** die Verformungseinrichtung (4) zwei beabstandete Halteplatten (8, 9) aufweist, an denen die Enden der Verformungselemente (5 bzw. 6) befestigt sind.

4. Vorrichtung nach Anspruch 3, **dadurch gekennzeichnet, dass** zwischen den Halteplatten (8, 9) eine Anschlussplatte (10) angeordnet ist, die an den Halteplatten (8, 9) befestigt ist.

5. Vorrichtung nach Anspruch 4, **dadurch gekennzeichnet, dass** die Anschlussplatte (10) mit einer Ausnehmung (11) versehen ist.

6. Vorrichtung nach einem der Ansprüche 2 bis 5, **dadurch gekennzeichnet, dass** der Verformungsspalt (7) geradlinig ausgebildet ist.

7. Vorrichtung nach Anspruch 6, **dadurch gekennzeichnet, dass** der Materialstreifen (2) ein Profilstab ist.

8. Vorrichtung nach einem der Ansprüche 2 bis 5, **dadurch gekennzeichnet, dass** der Verformungsspalt (7') eine nicht-geradlinige Kontur aufweist.

9. Vorrichtung nach einem der Ansprüche 6 bis 8, **dadurch gekennzeichnet, dass** der Materialstreifen (2; 2') eben ausgebildet ist.

10. Vorrichtung nach einem der Ansprüche 1 bis 9, **dadurch gekennzeichnet, dass** der Materialstreifen (2; 2') aus Aluminium oder Stahl aufgebaut ist.

11. Vorrichtung nach einem der Ansprüche 1 bis 10, **dadurch gekennzeichnet, dass** die Verformungselemente (5, 6) als feststehende Bolzen ausgebildet sind.

12. Vorrichtung nach Anspruch 1 oder 2, **dadurch gekennzeichnet, dass** die Verformungselemente (5, 6) drehbare Walzen sind.

13. Vorrichtung nach einem der Ansprüche 1 bis 12, **dadurch gekennzeichnet, dass** die Verformungseinrichtung (4) einen von zwei Laschen (16, 17) gehaltenen Sicherungsbolzen (18) aufweist, der eine Ausnehmung des Materialstreifens (2) durchgreift.

14. Vorrichtung nach einem der Ansprüche 1 bis 13, **dadurch gekennzeichnet, dass** die Verformungseinrichung (4) mit einem ortsfesten Verankerungselement (13) verbunden ist und über den Materialstreifen (2, 2') mit dem Seil (3) verbunden ist.

15. Vorrichtung nach einem der Ansprüche 1 bis 13, **dadurch gekennzeichnet, dass** die Verformungseinrichtung (4) in ein Seil (3) eingebaut ist, wobei sie an einem Ende über eine Verbindungseinrichtung (12, 13) mit einem ersten Seilabschnitt (3A) und am anderen Ende über den Materialstreifen (2) mit einem zweiten Seilabschnitt (3B) des Seils (3) verbunden ist.

16. Verfahren zur Energiedissipation in einem auf Zug belasteten Seil (3) mit folgenden Verfahrensschritten:
- Befestigen eines deformierbaren, langgestreckten, eine Längsachse (L) und eine wählbare Länge (LA) aufweisenden Materialsstreifens (2; 2') an dem Seil (3);
- Einführen eines Eintrittsabschnittes (2A) des Materialstreifens (2) in eine Verformungseinrichtung (4); und
- Aufnehmen der in das Seil (3) eingebrachten Energie durch geradliniges, umlenkungsfreies Hindurchziehen des Materialstreifens (2; 2') und dabei erfolgendes Deformieren des Materialstreifens (2; 2').
